# EUROPÄISCHE PATENTSCHRIFT

(11) **EP 2 719 569 B1**
(45) Veröffentlichungstag und Bekanntmachung des Hinweises auf die Patenterteilung: **11.03.2015**
(21) Anmeldenummer: 12007008.1
(22) Anmeldetag: 09.10.2012
(51) Int. Cl.: B60K 15/06, B60K 15/073, B60R 7/02

(54) **Transportabler Kraftstoffbehälter**
Transportable fuel tank
Réservoir de carburant transportable

(43) Veröffentlichungstag der Anmeldung: 16.04.2014
(73) Patentinhaber: Proaction GmbH, 52355 Düren (DE)
(72) Erfinder: Wessel, Wolfgang, 52355 Düren (DE)
(74) Vertreter: Hauck Patentanwaltspartnerschaft mbB

(56) Entgegenhaltungen:
- WO-A1-2008/091200
- US-A- 1 344 738
- US-A- 1 421 050
- US-A- 1 750 205

## Beschreibung

Die vorliegende Erfindung betrifft einen transportablen Kraftstoffbehälter für Kraftfahrzeuge gemäß Oberbegriff von Patentanspruch 1.

Es ist eine Vielzahl von Ausführungsformen von derartigen transportablen Kraftstoffbehältern bekannt, die auch als Reservekanister bezeichnet werden. Neben den üblichen Reservekanistern, die beispielsweise für die Aufnahme von 5 1 oder 10 1 Kraftstoff ausgebildet sind und eckige Formen besitzen, gibt es speziell ausgebildete Kraftstoffbehälter, die runde Formen aufweisen und zur Unterbringung in der Felgenmulde von Ersatzrädern der Kraftfahrzeuge ausgebildet sind. Diese Kraftstoffbehälter werden über geeignete Befestigungsmittel lösbar in der Felgenmulde fixiert, so dass sie sicher arretiert sind.

So ist beispielsweise aus der DE-GM 81 34 799 ein Reservekanister bekannt, der eine zylindrische Form besitzt, eine durch seine Achse hindurchgehende Öffnung aufweist und der innerhalb eines Ersatzrades untergebracht werden kann.

Diese bekannten Kraftstoffbehälter bzw. Reservekanister, die für die Unterbringung in Ersatzrädern ausgebildet sind, zeichnen sich alle durch eine flache zylindrische oder kegelstumpfförmige Ausbildung aus und sind so ausgebildet, dass sie den vollen Raum innerhalb eines Ersatzrades bzw. die entsprechende Felgenmulde ausfüllen. Sie besitzen daher auch einen relativ großen Rauminhalt.

Aus der WO 2008/091200 A1 ist ein transportabler Kraftstoffbehälter mit den Merkmalen des Oberbegriffes des Patentanspruches 1 bekannt. Der bekannte Behälter weist eine Öffnung auf, deren Achse senkrecht zur Behälterachse verläuft. Diese Öffnung befindet sich auf der Oberseite des Behälters.

Aus der US 1 421 050 A ist ein transportabler Kraftstoffbehälter bekannt, der ebenfalls eine Öffnung aufweist, deren Achse senkrecht zur Behälterachse verläuft. Auch diese Öffnung ist auf der Oberseite des Behälters angeordnet.

Die US 1 750 205 A beschreibt einen transportablen Behälter für Flüssigkeiten, der in der Form eines geraden Zylinders ausgebildet ist und endseitig eine Öffnung aufweist. Der Behälter kann zum Einfüllen von Kraftstoff in ein größeres Gefäß verwendet werden.

Die US 1 344 738 A beschreibt eine Kombination aus einem Reservetank und einem Haupttank, wobei sich der Reservetank im Haupttank befindet.

Der vorliegenden Erfindung liegt die Aufgabe zugrunde, einen transportablen Kraftstoffbehälter zu schaffen, der besonders einfach ausgebildet ist und sich besonders einfach unterbringen und handhaben lässt.

Diese Aufgabe wird erfindungsgemäß bei einem transportablen Kraftstoffbehälter der angegebenen Art durch die kennzeichnenden Merkmale von Patentanspruch 1 gelöst.
Die Erfindung wendet sich vom Konzept der herkömmlich ausgebildeten eckigen oder mehr oder weniger kreiszylindrisch ausgebildeten Reservekanister mit relativ großem Fassungsvermögen ab und schlägt stattdessen einen röhrenförmigen Kleinbehälter mit einem geringen Fassungsvermögen von beispielsweise 1-5 l vor. Dieser Kleinbehälter besitzt die Form einer gekrümmten Röhre, die als Teilring ausgebildet ist und beispielsweise die Form eines Viertelringes oder Halbringes besitzt, wobei natürlich auch sämtliche dazwischen liegende Formen realisiert sein können.

Das erfindungsgemäße Konzept beruht auf der Grundidee, einen transportablen Kraftstoffbehälter als Reservebehälter mit einem geringen Rauminhalt zu schaffen, der als Notreserve dienen kann und ohne entsprechenden Zusatzaufwand an vielen Stellen im Kraftfahrtzeug untergebracht werden kann. Der Behälter soll nur eine geringe Kraftstoffmenge, vorzugsweise in einem Bereich von 1-5 l, aufnehmen. Dadurch, dass der Kleinbehälter in Form einer gekrümmten teilringförmigen Röhre ausgebildet ist, lässt er sich einfach und bequem handhaben, und zwar sowohl beim Füllen mit Kraftstoff als auch bei der Unterbringung, beim Transport und beim Ausgießen in einen Tankeinfüllstutzen.

Der Kleinbehälter ist bananenförmig ausgebildet. Dies hat den Vorteil, dass diese Form eine besonders gute Handhabung des Behälters zum Ausgießen von Kraftstoff sicherstellt. So ist hierbei der Kleinbehälter an einem Ende unter Ausbildung einer Ausgießöffnung spitzzulaufend oder konisch ausgebildet.
Bei einerbevorzugten Ausführungsform ist die Röhre teilkreisringförmig ausgebildet, insbesondere halbkreisringförmig. Auch beideEnden können sich dabei verengen, d.h. spitz oder konisch zulaufen, um auf diese Weise die Tankbefüllung mit dem Kraftstoffbehälter zu erleichtern.

Der erfindungsgemäß ausgebildete Kraftstoffbehälter weist an einem Ende eine verschließbare Ausgießöffnung auf, die auch als Einfüllöffnung dienen kann. Diese ist zweckmäßigerweise mit einem Schraubverschluss versehen. Der Behälter lässt sich auf diese Weise einfach befüllen, insbesondere mit den an Tankstellen gebräuchlichen Betankungspistolen, aber auch einfach entleeren.

In Weiterbildung ist der Kleinbehälter so ausgebildet, dass seine Form an einen Abschnitt des Kraftfahrzeuges formschlüssig angepasst ist. Hierdurch lässt sich der Kleinbehälter bequem und sicher im oder am Kraftfahrzeug unterbringen. Beispielsweise besitzt der Kleinbehälter eine an einen muldenförmigen Abschnitt des Kraftfahrzeuges angepasste Form, so dass auf diese Weise eine sichere Lagerung, ggf. mit zusätzlichen Befestigungsmitteln, ermöglicht wird.

Bei einem Ausführungsbeispiel besitzt der Kleinbehälter eine an eine Felgenmulde des Reserverades eines Kraftfahrzeuges angepasste Form.

Bei einer anderen Ausführungsform besitzt der Kleinbehälter an einem Ende eine Einfüllöffnung und am anderen Ende eine Ausgießöffnung. Dabei ist die Einfüllöffnung vorzugsweise mit einem größeren Querschnitt bzw. Durchmesser versehen als die Ausgießöffnung, so dass der Behälter mit Hilfe einer Tankpistole gefüllt werden kann. Beide Öffnungen sind mit entsprechenden Verschlussdeckeln versehen, insbesondere Schraubverschlüssen.

Der Kleinbehälter kann beliebige Querschnittsformen besitzen, ist aber vorzugsweise kreisförmig oder rechteckförmig im Querschnitt ausgebildet. Der hier verwendete Begriff Röhre" soll daher nicht nur runde, sondern auch eckige Querschnittsformen abdecken.

Bei den verwendeten Schraubverschlüssen kann ein Ende oder können beide Enden des Kleinbehälters mit Innengewinde oder Außengewinde ausgestattet sein, so dass Verschlussdeckel einschraubbar oder aufschraubbar sind. Geeignete Dichtungsmittel können für einen abgedichteten Verschluss sorgen.

Die Erfindung wird nachfolgend anhand eines Ausführungsbeispiels in Verbindung mit der Zeichnung im Einzelnen beschrieben. Es zeigen:
- Figur 1: eine räumliche Ansicht eines Ausführungsbeispiels eines transportablen Kraftstoffbehälters, der nicht erfindungsgemäß ausgebildet ist;
- Figur 2: einen Längschnitt durch den Behälter der Figur 1;
- Figur 3: die Unterbringung des Behälters der Figuren 1 und 2 in der Felgenmulde eines Reserverades;
- Figur 4: eine räumliche Ansicht einer erfindungsgemäßen Ausführungsform eines transportablen Kraftstoffbehälters; und
- Figur 5: eine Seitenansicht einer weiteren erfindungsgemäßen Ausführungsform eines Kraftstoffbehälters.

Der in den Figuren dargestellte transportable Kraftstoffbehälter ist als Kleinbehälter ausgebildet und dient als Notreserve. Er wird in einem Kraftfahrzeug mitgeführt und kann in diesem an einer geeigneten Stelle angeordnet werden, beispielsweise über zusätzliche Befestigungsmittel, wie elastische Bänder, Schellen, Klettbänder etc. Er ist aus einem hierfür geeigneten Kunststoff gefertigt, was nicht ausschließt, dass der Behälter auch beispielsweise aus Metall bestehen kann. Im letztgenannten Fall kann die Befestigung des Behälters im oder am Kraftfahrzeug auch über geeignete Magneten erfolgen.

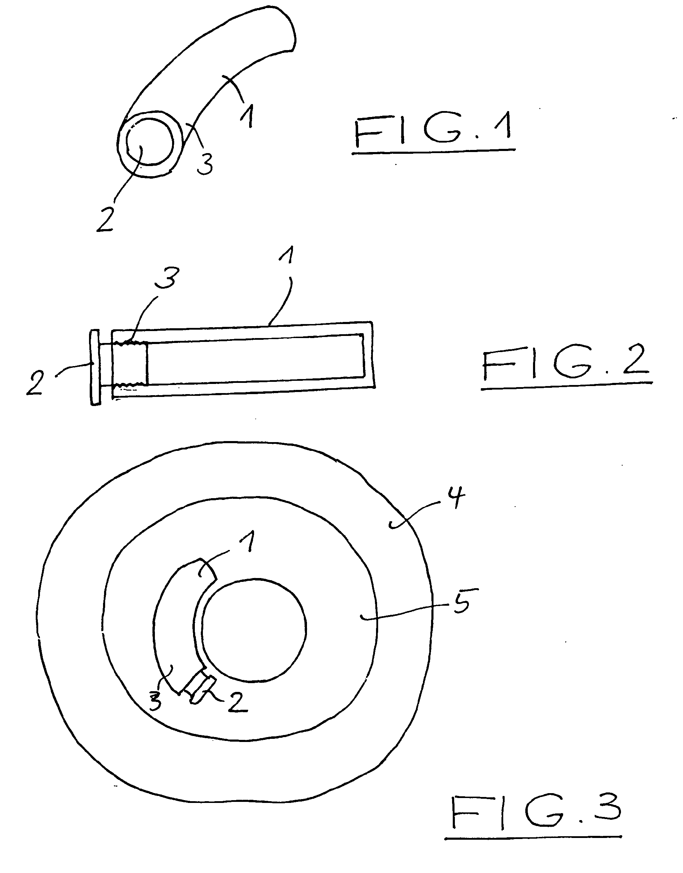

Der in Figur 1 räumlich dargestellte transportable Kraftstoffbehälter ist als Kleinbehälter 1 in Form einer gekrümmten teilringförmigen Röhre ausgebildet. Die beiden Enden des Kleinbehälters 1 sind hierbei eben ausgebildet, können natürlich auch gekrümmt ausgebildet sein. An einem Ende weist der Behälter eine verschließbare Einfüll/Ausgießöffnung 3 auf, die über einen Schraubverschluss 2 geschlossen ist.

Figur 2 zeigt, dass die Einfüll/Ausgießöffnung 3 mit einem Gewinde versehen ist, in das der Schraubverschluss 2 mit einem entsprechenden Gewinde eingeschraubt werden kann. Geeignete Dichtungsmittel sind vorgesehen, hier aber nicht gezeigt.

Figur 3 zeigt eine Draufsicht auf ein Reserverad eines Kraftfahrzeuges, wobei der auf einer Felge 5 angeordnete Reifen 4 dargestellt ist. Der transportable Kraftstoffbehälter ist in der Felgenmulde angeordnet. Der Behälter ist hierbei vorzugsweise so ausgebildet, dass er formschlüssig in der Felgenmulde untergebracht werden kann, so dass eine sichere fixierte Lagerung garantiert ist. Eine zusätzliche Befestigung über beispielsweise flexible Befestigungsmittel, wie Bänder etc., ist möglich.

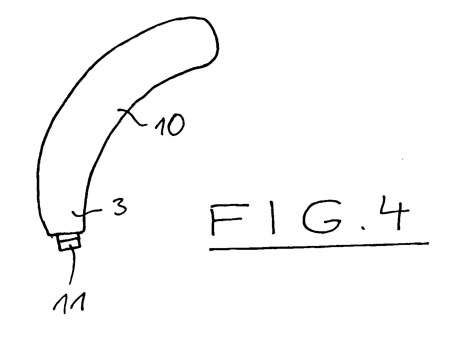

Figur 4 zeigt eine räumliche Ansicht einer erfindungsgemäßen Ausführungsform eines transportablen Kraftstoffbehälters. Bei dieser Ausführungsform ist der Kleinbehälter 10 ebenfalls in Form einer gekrümmten teilringförmigen Röhre ausgebildet, wobei bei dieser Ausführungsform ein Ende des Behälters, an dem sich die Einfüll/Ausgießöffnung befindet, spitz bzw. konisch zuläuft. Auch hierbei ist die Einfüll/Ausgießöffnung mit einem Schraubverschluss 11 versehen.

Die Handhabung des Behälters erfolgt folgendermaßen:

Der Behälter, der bei diesem Ausführungsbeispiel etwa 3 1 Kraftstoff aufnehmen kann, wird mit einer üblichen Tankpistole über die Einfüll/Ausgießöffnung 3 mit Kraftstoff befüllt. Die Öffnung wird mit dem Schraubverschluss 2, 11 verschlossen. Der befüllte Behälter kann dann an einer geeigneten Stelle im Kraftfahrzeug untergebracht werden, beispielsweise in der Felgenmulde des Reserverades, wie in Figur 3 gezeigt, und mit zusätzlichen Befestigungsmitteln fixiert werden. Im Notfall werden die Befestigungsmittel gelöst und wird der Kleinbehälter aus der Felgenmulde entnommen. Das mit der Einfüll/Ausgießöffnung 3 versehene Ende wird in den Tankstutzen des Kraftfahrzeugtanks eingeführt, um die Notration an Kraftstoff dem Kraftstofftank zuzuführen.

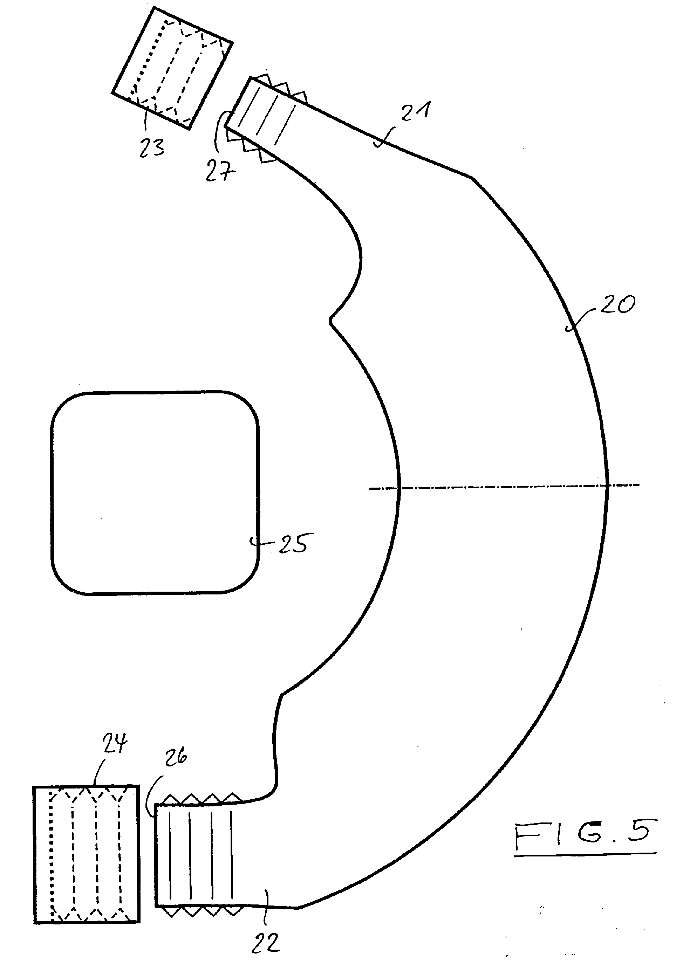

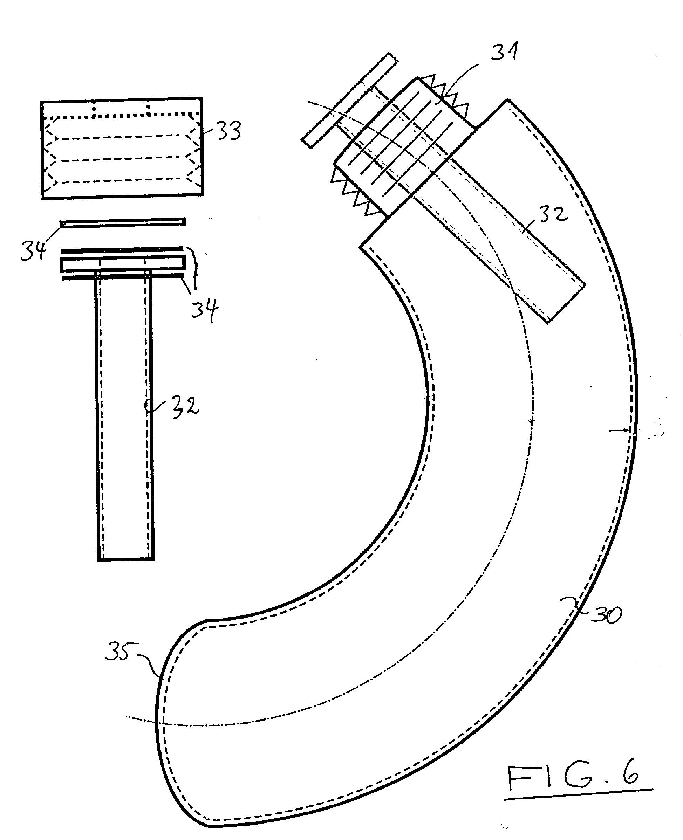

Figur 5 zeigt eine weitere Ausführungsform eines Kraftstoffbehälters in der Seitenansicht. Der hier dargestellte Kleinbehälter 20 ist bananenförmig ausgebildet und besitzt ein erstes spitzzulaufendes Ende 21 sowie ein zweites spitzzulaufendes Ende 22. Das erste Ende 21 ist mit einer Ausgießöffnung 27 versehen und weist ein Außengewinde auf, mit dem ein Verschlussdeckel 23 verschraubbar ist. Auch das zweite Ende 22 ist mit einem Außengewinde versehen und besitzt eine Einfüllöffnung 26. Diese ist mit einem Verschlussdeckel 24 verschließbar.

Mit 25 ist die Querschnittsform des Kleinbehälters 20 entlang der dargestellten strichpunktierten Linie gezeigt. Es handelt sich hierbei um einen quadratischen Querschnitt mit abgerundeten Ecken.

Die Innenkonturen und Außenkonturen verlaufen parallel zueinander, abgesehen von den beiden Endbereichen, die demgegenüber entsprechend verengt sind.

## Patentansprüche

1. Transportabler Kraftstoffbehälter für Kraftfahrzeuge, der als mit einer verschließbaren Ausgießöffnung (3,27) versehener Kleinbehälter ( 10, 20, ) in Form einer gekrümmten teilringförmigen Röhre ausgebildet ist, so dass er eine bananenförmige Gestalt aufweist, **dadurch gekennzeichnet, dass** ein Ende der Röhre mit der Ausgießöffnung (3, 27) versehen und dieses Ende so spitz zulaufend oder konisch ausgebildet ist, dass es in den Tankstutzen eines Kraftfahrzeuges einführbar ist.

2. Kraftstoffbehälter nach Anspruch 1, **dadurch gekennzeichnet, dass** die verschließbare Ausgießöffnung (3) auch als Einfüllöffnung ausgebildet ist.

3. Kraftstoffbehälter nach Anspruch 1 oder 2, **dadurch gekennzeichnet, dass** die Röhre teilkreisringförmig ausgebildet ist.

4. Kraftstoffbehälter nach einem der vorangehenden Ansprüche, **dadurch gekennzeichnet**, die Röhre halbkreisringförmig ausgebildet ist.

5. Kraftstoffbehälter nach einem der vorangehenden Ansprüche, **dadurch gekennzeichnet, dass** die Einfüll/Ausgießöffnung (3) mit einem Schraubverschluss (11) versehen ist.

6. Kraftstoffbehälter nach einem der vorangehenden Ansprüche, **dadurch gekennzeichnet, dass** der Kleinbehälter (10, 20) so ausgebildet ist, dass seine Form an einen Abschnitt des Kraftfahrzeuges formschlüssig angepasst ist.

7. Kraftstoffbehälter nach Anspruch 6, **dadurch gekennzeichnet, dass** der Kleinbehälter (10, 20) eine an einen muldenförmigen Abschnitt des Kraftfahrzeuges angepasste Form besitzt.

8. Kraftstoffbehälter nach Anspruch 6 oder 7, **dadurch gekennzeichnet, dass** der Kleinbehälter (10, 20) eine an eine Felgenmulde des Reserverades eines Kraftfahrzeuges angepasste Form besitzt.

9. Kraftstoffbehälter nach einem der Ansprüche 1 oder 3 bis 8, **dadurch gekennzeichnet, dass** der Kleinbehälter (20) an einem Ende mit einer Einfüllöffnung (26) und am anderen Ende mit einer Ausgießöffnung (27) versehen ist.

10. Kraftstoffbehälter nach einem der vorangehenden Ansprüche, **dadurch gekennzeichnet, dass** der Kleinbehälter (10, 20) im Querschnitt kreisförmig oder rechteckförmig ausgebildet ist.

## Claims

1. A transportable fuel container for motor vehicles which is formed as small container (10, 20) provided with a closable discharge opening (3, 27) and having the shape of a curved part-ring-like tube so that it has a banana-like shape, **characterized in that** one end of the tube is provided with the discharge opening (3, 27) and this end is so tapered or conically formed that it can be introduced into the tank inlet pipe of a motor vehicle.

2. The fuel container according to claim 1, **characterized in that** the closable discharge opening (3) is also formed as charge opening.

3. The fuel container according to claim 1 or 2, **characterized in that** the tube is formed like a part-circular ring.

4. The fuel container according to one of the preceding claims, **characterized in that** the tube is formed like a semicircular ring.

5. The fuel container according to one of the preceding claims, **characterized in that** the charge opening/discharge opening (3) is provided with a screw-type cap.

6. The fuel container according to one of the preceding claims, **characterized in that** the small container (10, 20) is formed in such a manner that its shape is positively adapted to a portion of the motor vehicle.

7. The fuel container according to claim 6, **characterized in that** the small container (10, 20) has a shape adapted to a trough-like portion of the motor vehicle.

8. The fuel container according to claim 6 or 7, **characterized in that** the small container (10, 20) has a shape adapted to a rim trough of the spare wheel of a motor vehicle.

9. The fuel container according to one of the claims 1 or 3 to 8, **characterized in that** the small container (20) is provided with a charge opening (26) at one end and with a discharge opening (27) at the other end.

10. The fuel container according to one of the preceding claims, **characterized in that** the small container (10, 20) is formed circularly or rectangularly in cross-section.

## Revendications

1. Réservoir de carburant transportable pour véhicules à moteur qui est conçu comme un petit récipient (10, 20) en forme de tube curviligne partiellement annulaire, pourvu d'une ouverture de déversement (3, 27) fermable, de sorte qu'il présente une forme de banane, **caractérisé en ce qu'**une extrémité du tube est pourvue de l'ouverture de déversement (3, 27) et que cette extrémité est conçue effilée ou conique de sorte qu'elle peut être introduite dans la tubulure de réservoir d'un véhicule à moteur.

2. Réservoir de carburant selon la revendication 1, **caractérisé en ce que** l'ouverture de déversement (3) fermable est également conçue comme ouverture de remplissage.

3. Réservoir de carburant selon l'une quelconque des revendications précédentes, **caractérisé en ce que** le tube est conçu en forme d'anneau de cercle partiel.

4. Réservoir de carburant selon l'une quelconque des revendications précédentes, **caractérisé en ce que** le tube est conçu en forme de demi-anneau de cercle.

5. Réservoir de carburant selon l'une quelconque des revendications précédentes, **caractérisé en ce que** l'ouverture de remplissage / de déversement (3) est pourvue d'un bouchon fileté (11).

6. Réservoir de carburant selon l'une quelconque des revendications précédentes, **caractérisé en ce que** le petit récipient (10, 20) est conçu de manière que sa forme soit adaptée par complémentarité de forme à une partie du véhicule à moteur.

7. Réservoir de carburant selon la revendication 6, **caractérisé en ce que** le petit récipient (10, 20) a une forme adaptée à une partie en forme de cuvette du véhicule à moteur.

8. Réservoir de carburant selon la revendication 6 ou 7, **caractérisé en ce que** le petit récipient (10, 20) a une forme adaptée à une cuvette de jante de la roue de secours d'un véhicule à moteur.

9. Réservoir de carburant selon l'une quelconque des revendications 1 ou 3 à 8, **caractérisé en ce que** le petit récipient (20) est pourvu à une extrémité d'une ouverture de remplissage (26) et à l'autre extrémité d'une ouverture de déversement (27).

10. Réservoir de carburant selon l'une quelconque des revendications précédentes, **caractérisé en ce que** le petit récipient (10, 20) est conçu de forme circulaire ou rectangulaire en coupe transversale.
